Europäisches Patentamt

European Patent Office

Office européen des brevets

(19)

(11) Veröffentlichungsnummer: **0 028 352**
**B1**

(12)

# EUROPÄISCHE PATENTSCHRIFT

(45) Veröffentlichungstag der Patentschrift:
29.06.83

(21) Anmeldenummer: **80106409.8**

(22) Anmeldetag: **21.10.80**

(51) Int. Cl.³: **B 60 C 7/10, B 29 H 11/00**

(54) Gummifeder-Ersatzreifen und Verfahren zu seiner Herstellung.

(30) Priorität: **02.11.79 DE 2944150**

(43) Veröffentlichungstag der Anmeldung:
**13.05.81 Patentblatt 81/19**

(45) Bekanntmachung des Hinweises auf die Patenterteilung:
**29.06.83 Patentblatt 83/26**

(84) Benannte Vertragsstaaten:
**AT BE CH DE FR GB IT LI NL SE**

(56) Entgegenhaltungen:
**FR-A-2 294 866**
**GB-A-917 659**
**US-A-1 570 048**
**US-A-1 597 381**

(73) Patentinhaber: **BAYER AG, Zentralbereich Patente, Marken und Lizenzen, D-5090 Leverkusen 1, Bayerwerk (DE)**

(72) Erfinder: **Ippen, Jakob, Dr., Schleiermacherstrasse 17, D-5090 Leverkusen (DE)**
Erfinder: **Stüttgen, Friedel, Albrecht-Dürer-Strasse 94, D-5024 Pulheim (DE)**

Gummifeder-Ersatzreifen und Verfahren zu seiner Herstellung

Die vorliegende Erfindung betrifft einen Gummifeder-Ersatzreifen sowie ein Verfahren zu seiner Herstellung, bestehend aus einem Reifenfuss und einer mit Profilen versehenen Lauffläche, die miteinander auf den gegenüberliegenden Seiten jeweils gegeneinander versetzt durch Zwischenstege verbunden sind, deren Form innen durch über die Reifenmitte verlaufende, bogenförmige, in Umfangsrichtung miteinander verzahnte Aushöhlungen und aussen oberhalb eines konvex gewölbten Äquators durch eine konkave Einbuchtung vor der Lauffläche bestimmt ist.

Bekannt ist ein Gummireifen, bei dem nach üblichen Bauart lagenweise ein Gummifusslager, eine Gewebeverstärkungslage, ein Gummiblock, ein Textilgürtelverbund und eine Lauffläche angeordnet ist, wobei die Ausnehmungen erst nachträglich mittels Stempel beim Schliessen des Werkzeuges erzeugt werden.

Der Nachteil dieser Konstruktion besteht darin, dass wegen der lagenweisen Aufbringung der Arbeitsaufwand gross ist. Durch die nachträgliche Herstellung der Ausnehmungen in der Form ist die Gefahr gross, dass sich der Textilgürtelverbund aus seiner vorgegebenen Lage verschiebt. Auch hat die Praxis bewiesen, dass Gewebeverstärkungseinlagen wegen der grossen Dehnung einen Festsitz auf der Felge nicht auf Dauer gewährleisten können.

Weiter ist ein Reifen auf zweiteiliger Felge bekannt, der aus einem umlaufenden Reifenfuss mit einer Drahtkerneinlage besteht, auf den säulenartige Zwischenstege entlang des Felgenrandes unter gegenseitiger Versetzung angeordnet sind, die die eigentliche Lauffläche tragen.

Nachteilig ist die Drahtkerneinlage bei dem in einem Stück gespritzten Reifen. Ferner muss die Felge mindestens zweiteilig sein, was technisch aufwendig ist.

Der Erfindung liegt die Aufgabe zugrunde, einen pannensicheren, preiswerten Ersatzreifen für Kraftfahrzeuge mit ausreichenden Federeigenschaften zu finden, der auch im Notfall trotz fehlender Wartung jederzeit einsatzbereit ist.

Die Aufgabe wird erfindungsgemäss dadurch gelöst, dass der Reifenfuss des unbewehrten Gummifeder-Ersatzreifens unmittelbar auf den einteiligen Felgenring aufgespritzt oder aufvulkanisiert ist.

Der Vorteil dieses Reifens besteht darin, dass er in einem Arbeitsgang direkt auf den Felgenring aufgebracht wird, so dass er unverrückbar damit verbunden ist, wodurch eine sichere Führung des Fahrzeuges gewährleistet ist. Die Herstellung in einer Arbeitsstufe ist wirtschaftlich. Eine Wartung ist im Gegensatz zum Luftreifen nicht notwendig, er eignet sich deshalb besonders als Reservereifen. Weiter ist die Bauhöhe dieses pannensicheren Reifens gering, so dass infolge des grösseren Felgendurchmessers eine bessere Kühlung der Bremstrommeln möglich ist.

In einer besonderen Ausführungsform besteht der Gummifeder-Ersatzreifen aus vernetzbaren, insbesondere Urethan- oder Harnstoffgruppen enthaltenden Elastomeren.

Diese Stoffe sind besonders geeignet für die Herstellung solcher Gummifeder-Ersatzreifen.

Die Herstellung des Gummifeder-Ersatzreifens erfolgt nach dem Injection-*molding*- oder Spritzgussverfahren.

Mit diesen Verfahren kann der erfindungsgemässe Gegenstand in einfachen Transferformen in einem Arbeitsgang hergestellt werden.

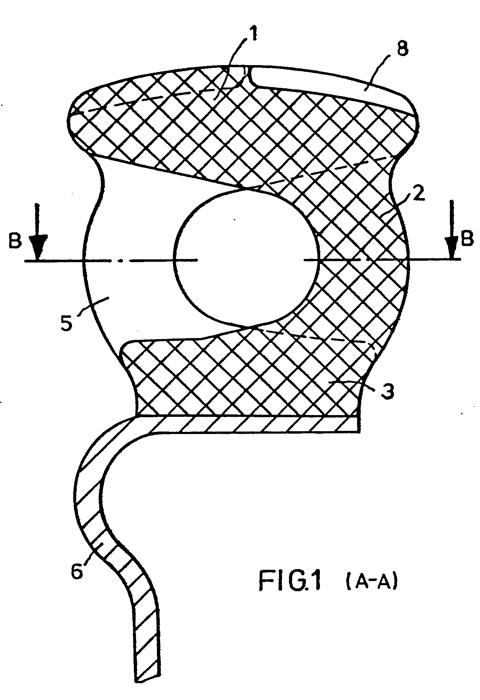

Fig. 1 ist ein Querschnitt durch eine bevorzugte Ausführungsform des erfindungsgemässen Reifens, bei der der Reifenfuss 3 direkt auf einen normalen Felgenring 6 aufgespritzt (aufvulkanisiert) ist. Durch die axialen, sich miteinander verzahnenden Aushöhlungen 5 werden die gegenläufig orientierten, federnden Zwischenstege 3 gebildet und die Reifenmasse soweit reduziert, dass eine ausreichende Kühlung während des Laufs erreicht wird. Die positiv (radial) gewölbte Lauffläche 1 ist beidseitig mit in Laufrichtung gegeneinander versetzten axialen Profileinschnitten 8 versehen.

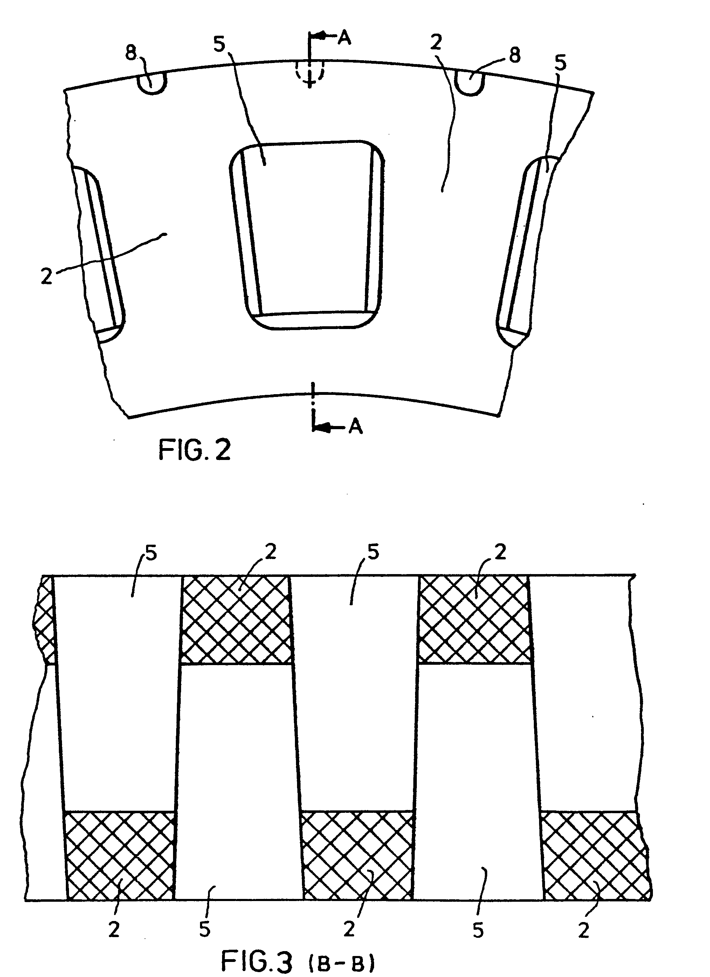

Fig. 2 ist ein Ausschnitt aus der Seitenansicht eines erfindungsgemässen Reifens und zeigt die Aushöhlungen 5, Zwischenstege 2 und Profileinschnitte 8.

Fig. 3 ist ein Schnitt durch die Äquatorzone des Reifens (entsprechend B-B in Fig. 1 und 2). Hier ist deutlich die Anordnung der zahnförmig ineinander übergreifenden Aushöhlungen 5 und der dadurch gebildeten gegeneinander versetzten Zwischenstege 2 zu erkennen.

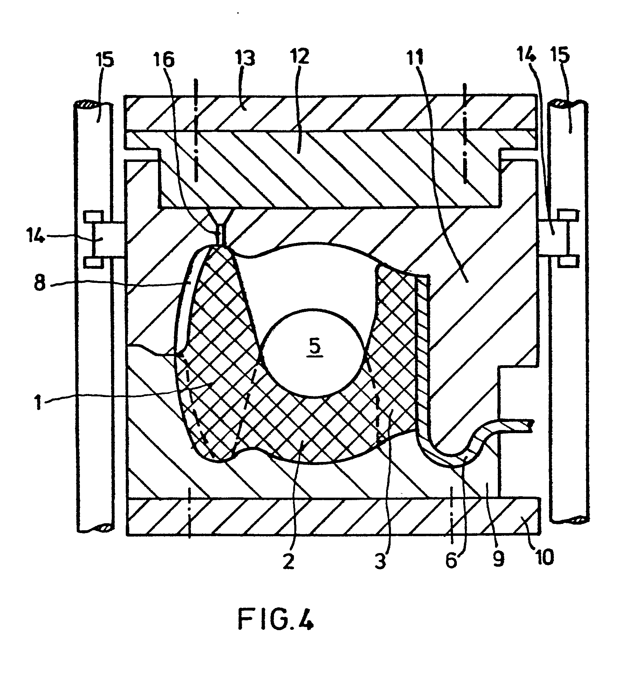

Fig. 4 zeigt eine Transferform, in die ein Reifen mit Lauffläche 1 einschliesslich Profileinschnitten 8, Zwischenstegen 2, Reifenfuss 3 und Felge 6 eingelegt ist. Die geteilte Transferform besteht aus Formunterteil 9 mit unterer Heizplatte 10, Formoberteil 11, Spritzkolben 12 mit oberer Heizplatte 13, Schliesskolben 15 mit Befestigungsöse 14 und Einspritzkanal 16.

*Beispiel:*

In das Formunterteil 9 wird zunächst die Felge 6 eingelegt. Die Kontaktfläche der Felge ist oberflächenbehandelt, d.h. gereinigt und mit einem Haftvermittler versehen worden. In das Formoberteil 11 wird eine vulkanisierbare Kautschukmischung eingebracht. Durch Schliessen der Form wird über den Spritzkolben 12 durch den Spritzkanal 16 der Hohlraum der Form mit der Mischung gefüllt. Der Schliessdruck der Form liegt bei 100-150 kp/cm². Nach Schliessen der Form beträgt die Heizzeit 8-12 min bei 145-175° C. Danach kann der fertige, mit der Felge fest verbundene Reifen entnommen werden.

Zur Reifenherstellung werden die im folgenden beschriebenen Kautschukmischungen verwendet. Die für die Zusammensetzung angegebenen Zahlen sind Gewichtsteile.

*Mischung 1*

Zusammensetzung:

| | |
|---|---:|
| Naturkautschuk | 25,0 |
| Styrol/Butadien-Copolymerisat | 25,0 |
| Cis-1,4-polybutadien | 50,0 |
| Russ N-330 | 80,0 |
| Harz | 4,0 |
| Stearinsäure | 2,0 |
| N-Isopropyl-N'-phenyl-p-phenylendiamin | 2,5 |
| 2,2,4-Trimethyl-1,2-dihydrochinolin, polym. | 1,5 |
| Zinkoxid | 5,0 |
| Benzothiazyl-2-cyclohexylsulfenamid | 1,2 |
| Unlöslicher Schwefel | 2,66 |
| | 198,66 |

Eigenschaften:

| | |
|---|---:|
| Mischungsplastizität/80°C | |
| Defo-Härte/Defo-Elastizität | 7700/17 |
| Zugfestigkeit (kp/cm²) | 199 |
| Bruchdehnung (%) | 310 |
| Spannungswert bei 300% Dehnung (kp/cm²) | 191 |
| Weiterreissfestigkeit nach Pohle (kp/4 mm) | 16 |
| Härte (Shore A) bei 20°C | 82 |

*Mischung 2*

Zusammensetzung:

| | |
|---|---:|
| Naturkautschuk | 80,0 |
| Cis-1,4-polybutadien | 20,0 |
| Russ N-330 | 55,0 |
| Aromatisches Mineralöl | 3,0 |
| Stearinsäure | 2,5 |
| Ozonschutzwachs | 1,0 |
| N-Isopropyl-N'-phenyl-p-phenylendiamin | 2,5 |
| 2,2,4-Trimethyl-1,2-dihydrochinolin, polym. | 1,5 |
| Zinkoxid | 5,0 |
| Benzothiazyl-2-sulfenmorpholid | 1,2 |
| Unlöslicher Schwefel | 1,9 |
| | 173,6 |

Eigenschaften:

| | |
|---|---:|
| Mischungsplastizität/80°C | |
| Defo-Härte/Defo-Elastizität | 1100/15 |
| Zugfestigkeit (kp/cm²) | 219 |
| Bruchdehnung (%) | 460 |
| Spannungswert bei 300% Dehnung (kp/cm²) | 130 |
| Weiterreissfestigkeit nach Pohle (kp/4 mm) | 37 |
| Härte (Shore A) bei 20°C | 66 |

*Mischung 3*

Zusammensetzung:

| | |
|---|---:|
| Naturkautschuk | 25,0 |
| Cis-1,4-polybutadien | 75,0 |
| Russ N-330 | 90,0 |
| Harz | 4,0 |
| Fichtenholzteer | 4,0 |
| Harzweichmacher | 10,0 |
| Zn-Salz von unges. Fettsäuren | 4,0 |
| Stearinsäure | 3,0 |
| N-Isopropyl-N-phenylendiamin | 2,5 |
| 2,2,4-Trimethyl-1,2-dihydrochinolin | 1,5 |
| Ozonschutzwachs | 2,0 |
| Zinkoxid | 5,0 |
| Benzothiazyl-2-cyclohexylsulfenamid | 1,5 |
| Schwefelbatch (80%ig) | 5,0 |
| N-Cyclohexylthiophthalimid | 0,5 |
| | 233,0 |

Eigenschaften:

| | |
|---|---:|
| Mischungsplastizität/80°C | |
| Defo-Härte/Defo-Elastizität | 3750/13 |
| Zugfestigkeit (MPA) | 16,0 |
| Bruchdehnung (%) | 250 |
| Spannungswert bei 100% Dehnung (MPA) | 6,9 |
| Weiterreissfestigkeit nach Pohle (N) | 150 |
| Härte bei 20°C (Shore A) | 85 |

*Mischung 4*

Zusammensetzung:

| | |
|---|---:|
| Naturkautschuk | 80,0 |
| Cis-1,4-polybutadien | 20,0 |
| Pentachlorthiophenol | 0,2 |
| Russ N-359 | 110,0 |
| Aromatisches Mineralöl | 10,0 |
| Wollfett | 5,0 |
| Fichtenholzteer | 5,0 |
| Zn-Salz von unges. Fettsäuren | 4,0 |
| Stearinsäure | 3,0 |
| Ozonschutzwachs | 2,0 |
| N-Isopropyl-N-phenyl-p-phenylendiamin | 2,5 |
| 2,2,4-Trimethyl-1,2-dihydrochinolin | 1,5 |
| Zinkoxid | 5,0 |
| Benzothiazyl-2-sulfenmorpholid | 1,5 |
| Tetramethylthiurammonosulfid | 0,15 |
| Schwefelbatch (80%ig) | 5,6 |
| N-Cyclohexylthiophthalimid | 0,5 |
| | 255,95 |

Eigenschaften:

| | |
|---|---:|
| Mischungsplastizität/80°C | |
| Defo-Härte/Defo-Elastizität | 1125/14 |
| Zugfestigkeit (MPa) | 15,3 |
| Bruchdehnung (%) | 160 |
| Spannungswert bei 100% Dehnung (MPa) | 9,4 |
| Weiterreissfestigkeit nach Pohle (N) | 160 |
| Härte bei 20°C (Shore A) | 82 |

**Patentansprüche**

1. Gummifeder-Ersatzreifen, bestehend aus einem Reifenfuss (3) und einer mit Profilen (8) versehenen Lauffläche (1), die miteinander auf den gegenüberliegenden Seiten jeweils gegeneinander versetzt durch Zwischenstege (2) verbunden sind, deren Form innen durch über die Reifenmitte verlaufende, bogenförmige, in Umfangsrichtung miteinander verzahnte Aushöhlungen (5) und aussen oberhalb eines konvex gewölbten Äquators durch eine konkave Einbuchtung vor der Lauffläche bestimmt ist, dadurch gekennzeichnet, dass der Reifenfuss (3) des unbewehrten Gummifeder-Ersatzreifens unmittelbar auf den einteiligen Felgenring (6) aufgespritzt oder aufvulkanisiert ist.

2. Gummifeder-Ersatzreifen nach Anspruch 1, dadurch gekennzeichnet, dass dieser aus vernetzbaren, insbesondere Urethan- oder Harnstoffgruppen enthaltenden Elastomeren besteht.

3. Verfahren zur Herstellung des Gummifeder-Ersatzreifens nach den beiden Ansprüchen 1 und 2, dadurch gekennzeichnet, dass die Herstellung nach dem Injection-*molding*- oder Spritzgussverfahren erfolgt.

## Claims

1. A rubber sprung spare tyre consisting of a tyre foot (3) and a tread (1) provided with shaped sections (8), which tyre foot (3) and tread (1) are connected to one another on the opposing sides by intermediate crosspieces (2) which are offset against each other, the shape of which crosspieces (2) is defined on the inside by arc-shaped recesses (5) which run over the centre of the tyre and interlock with each other in a circumferential direction and on the outside, above a convexly arched equator, by a concave indentation preceding the tread, characterised in that the tyre foot (3) of the non-reinforced rubber sprung spare tyre is directly injection-moulded or vulcanised on to the one-piece rim ring (6).

2. A rubber sprung spare tyre according to claim 1, characterised in that it consists of crosslinkable elastomers containing in particular urethane or urea groups.

3. Process for the production of the rubber sprung spare tyre according to claims 1 and 2, characterised in that the production is effected by the injection-moulding or die-casting method.

## Revendications

1. Pneu de secours à ressort de caoutchouc, consistant en une semelle de pneu (3) et en une bande de roulement (1) pourvue de sculptures (8), qui sont chaque fois décalées entre elles sur les côtés opposés et qui sont reliées par des traverses intermédiaires (2) dont la forme intérieurement est déterminée par des évidements (5) passant par le milieu du pneu, de forme arquée, s'engrenant mutuellement dans la direction périphérique et extérieurement, au-dessus d'un équateur à bombement convexe, par une indentation concave avant la bande de roulement, caractérisé en ce que la semelle de pneu (3) du pneu de secours à ressort de caoutchouc non armé est directement appliquée par injection sur le cercle de blocage en une pièce (6) ou est vulcanisée sur celui-ci.

2. Pneu de secours à ressort de caoutchouc selon la revendication 1, caractérisé en ce que celui-ci consiste en des élastomères réticulables contenant en particulier des groupes uréthanne ou urée.

3. Procédé de fabrication du pneu de secours à ressort de caoutchouc selon les revendications 1 et 2, caractérisé en ce que la fabrication se fait par le procédé d'injection-molding ou de coulée par injection.

FIG.1  (A-A)

FIG. 2

FIG.3 (B-B)

FIG.4